# FASCICULE DE BREVET EUROPEEN

(11) **EP 1 810 907 B1**
(45) Date de publication et mention de la délivrance du brevet: **23.02.2011**
(21) Numéro de dépôt: 07290040.0
(22) Date de dépôt: 10.01.2007
(51) Int. Cl.: B60W 30/12, G05D 1/02

(54) **Procédé de réglage de l'orientation d'une caméra installée dans un véhicule et système de mise ene oeuvre de ce procédé**
Verfahren zur Einstellung der Ausrichtung einer in einem Fahrzeug installierten Kamera und System zur Durchführung dieses Verfahrens
Method of adjusting the orientation of a camera installed on a vehicle and system for implementing this method

(30) Priorité: 19.01.2006 FR 0600497
(43) Date de publication de la demande: 25.07.2007
(73) Titulaire: VALEO VISION, 93012 Bobigny Cedex (FR)
(72) Inventeur: Leleve, Joël, 93800 Epinay (FR); Rebut, Julien, 75010 Paris (FR)
(74) Mandataire: Tran, Chi-Hai

(56) Documents cités:
- EP-A- 1 681 577
- DE-A1- 10 115 043
- DE-A1- 10 237 554
- FR-A1- 2 848 161
- JP-A- 2003 329 411
- JP-A- 2004 247 979

## Description

L'invention concerne un procédé de réglage, par un utilisateur, de l'orientation d'une caméra installée dans un véhicule. L'utilisateur est un particulier inexpérimenté dans le réglage de caméras, par exemple le conducteur du véhicule dans lequel est installée la caméra à régler. Le procédé de l'invention est destiné à permettre l'installation, par un particulier, d'un système de détection d'obstacles ou de suivi de lignes blanches dans un véhicule.

L'invention concerne également un système de mise en oeuvre de ce procédé.

L'invention trouve des applications dans le domaine de l'automobile et, en particulier, dans le domaine du service après-vente de l'automobile pour l'installation de systèmes utilisant une caméra dans un véhicule.

Dans le domaine de l'automobile, de nombreux systèmes sont installés sur les véhicules pour augmenter la sécurité des personnes à bord du véhicule en facilitant la conduite du véhicule. Parmi ces systèmes dédiés à la sécurité du véhicule, il existe des systèmes permettant la détection d'obstacles sur la route et des systèmes permettant le suivi des lignes blanches au sol.

Un système de détection d'obstacles assure la détection d'un obstacle, d'un piéton ou d'un autre véhicule dans une scène de route située à l'avant du véhicule équipé de ce système. Un tel système a pour but de compléter la vision de la scène de route par le conducteur en affichant, sur un écran, les véhicules, piétons et autres obstacles détectés dans la scène de route.

Un système de suivi de lignes blanches assure la détection des marquages parallèles, au sol, appelés généralement lignes blanches. Un tel système de suivi de lignes blanches permet de détecter aussi bien les lignes continues que les lignes discontinues ou les bandes d'arrêt d'urgence, sur une route. Lorsqu'un véhicule équipé d'un tel système franchit l'une des lignes blanches détectées, sans avoir préalablement indiqué son intention de franchir cette ligne au moyen des feux clignotants, un signal d'avertissement est émis à l'intention du conducteur. Ce signal d'avertissement peut être un signal sonore retentissant dans le véhicule, ou tout autre signal sensitif, informant le conducteur du dépassement d'une ligne blanche. Un tel système permet d'augmenter la vigilance du conducteur, en particulier en conduite de nuit.

Généralement, les systèmes de détection d'obstacles ou de suivi de lignes blanches comportent une caméra installée dans le véhicule. Cette caméra assure une prise d'images de la scène de route située à l'avant du véhicule. Dans le cas d'un système de détection d'obstacles, la caméra est associée à une unité de commande, tel qu'un processeur, qui assure un traitement de l'image pour détecter, sur cette image, la présence ou non d'un obstacle. Dans le cas d'un système de suivi de lignes blanches, la caméra est associée à une unité de commande, tel qu'un processeur, qui assure un traitement de l'image pour déterminer la position du véhicule par rapport aux lignes blanches détectées sur l'image.

Dans la plupart des véhicules, la caméra est installée derrière le pare-brise, sous le rétroviseur central. Elle est donc placée entre le pare-brise et le rétroviseur central de façon à ne pas diminuer la visibilité du conducteur. Ainsi placée, la caméra est approximativement centrée dans le véhicule.

Dans le cas d'un système de détection d'obstacles, l'unité de commande peut être associée à un écran de visualisation, situé à l'intérieur du véhicule. Cet écran de visualisation affiche une image traitée de la scène de route située à l'avant du véhicule, offrant au conducteur une vision améliorée de ladite scène de route. Cet écran de visualisation permet au conducteur, notamment la nuit ou par mauvais temps, d'avoir une vision plus précise de la scène de route et, ainsi, de mieux appréhender un éventuel obstacle situé sur la route.

Dans le cas d'un système de suivi de lignes blanches, le système n'est pas nécessairement associé à un écran de visualisation. En effet, le conducteur peut visualiser directement la ligne blanche à travers le pare-brise. Le conducteur peut être simplement informé du franchissement de la ligne blanche par un signal sonore ou optique.

Qu'il s'agisse d'un système de détection d'obstacle ou d'un système de suivi de lignes blanches, la caméra permettant la prise d'images de la scène de route doit être orientée convenablement afin de permettre une détection correcte de l'élément recherché dans la scène de route. En effet, une mauvaise orientation de la caméra pourrait entrainer la détection d'un obstacle ou d'une ligne blanche sur une autre voie de la route que celle sur laquelle circule le véhicule avec des conséquences sur la conduite du conducteur. En particulier pour le suivi de lignes blanches, la caméra doit être orientée de façon à ce que la détection de l'élément s'opère de façon symétrique de telle sorte que la perception du signal de sortie de voie, par le conducteur, soit identique pour la voie de gauche et la voie de droite.

Actuellement, ces systèmes de détection d'obstacles et de suivi de lignes blanches sont généralement montés en série sur les véhicules. Ces systèmes sont donc installés sur les véhicules, directement dans les chaînes de montage des constructeurs automobiles. L'orientation de la caméra est alors réglée de façon optimale, par le constructeur, au moyen d'un banc de réglage spécifique permettant un paramétrage des logiciels de détection et un réglage parfait.

Le réglage de la caméra, sur site, a pour conséquence qu'un particulier doit prévoir, lors de l'achat de son véhicule, s'il souhaite faire installer un de ces systèmes. Il peut donc installer un de ces systèmes uniquement sur un véhicule neuf.

De plus, lorsqu'un véhicule a été accidenté et qu'un désalignement du système s'est produit, il est nécessaire de régler à nouveau l'orientation de la caméra. Or, en l'absence d'un banc de réglage spécifique, trop couteux pour la plupart des réparateurs automobiles et nécessitant des compétences particulières, le réparateur du véhicule ne peut réaliser ce réglage.

De même, un particulier qui souhaiterait installer un kit de suivi de lignes blanches ou de détection d'obstacles, acheté en service après vente, ne pourrait régler la caméra. Par conséquent, à ce jour, ce type de système n'est pas offert à la vente aux particuliers.

Il est également connu de la demande de brevet FR 2 848 161 un système de commande de l'orientation d'un projecteur de véhicule muni d'une caméra fixée sur le réflecteur mobile et connectée à une unité de traitement d'images, système qui comprend la détermination à partir d'une image de scène de route d'une ligne d'horizon, la comparaison de cette ligne d'horizon mesurée avec une ligne d'horizon de consigne, et la détermination de l'écart entre les deux permettant le réglage de l'orientation du projecteur.

Il est également connu de la demande de brevet EP 1 681 577 une méthode de correction de l'orientation d'un capteur optique mal positionné dans l'habitacle d'un véhicule.

L'invention a justement pour but de remédier aux inconvénients des techniques exposées précédemment. A cette fin, l'invention propose un procédé permettant à un conducteur ou à tout autre particulier de régler l'orientation d'une caméra installée derrière le pare-brise d'un véhicule. Pour cela, le procédé de l'invention propose de rechercher, dans une image réalisée par la caméra, une ligne d'horizon et de chercher à aligner cette ligne d'horizon avec une ligne prédéterminée correspondant au milieu de l'image.

De façon plus précise, l'invention concerne un procédé de réglage de l'orientation d'une caméra installée à bord d'un véhicule selon la revendication 1.

Le procédé de l'invention peut comporter une ou plusieurs des caractéristiques selon les revendications dépendantes 2-7.

L'invention concerne également un système de réglage de l'orientationd'une caméra selon la revendication 9.

Ce système de l'invention peut comporter une ou plusieurs des caractéristiques selon les revendications dépendantes 9-12.

L'invention concerne également un véhicule selon la revendication 13.

Les figures 1A et 1B représentent des exemples d'images d'une scène de route obtenues avec le procédé de l'invention, respectivement, dans le cas d'un réglage horizontal et d'un réglage en tangage d'une caméra.

La figure 2 représente un exemple de pare-brise de véhicule équipé du système de réglage d'une caméra, selon l'invention.

L'invention propose un procédé pour régler l'orientation d'une caméra à bord d'un véhicule afin d'assurer une mise en oeuvre optimale d'un procédé utilisant cette caméra. Un procédé utilisant une telle caméra peut être, par exemple, un procédé de détection d'obstacle. Ce peut être également un procédé pour détecter des marquages au sol parallèles. L'invention va être décrite en particulier pour cette application à la détection de marquages au sol, appelés par la suite lignes blanches. Ces lignes blanches peuvent être des lignes continues, discontinues ou des bandes d'arrêt d'urgence.

Le procédé de l'invention est basé sur l'estimation d'un point de fuite à partir de l'image de ces lignes blanches et sur l'estimation d'un milieu dans un plan vertical de l'image, le milieu de l'image et le point de fuite devant être superposés pour que l'orientation horizontale de la caméra soit optimale. L'orientation verticale se fait par coïncidence entre le point de fuite et le point de positionnement.

Le procédé de l'invention peut être mis en oeuvre lorsque le véhicule à bord duquel est installée la caméra est placé sur un emplacement muni de lignes blanches au sol. Cet emplacement peut être, par exemple, un parking ou bien une voie interdite à la circulation, ou tout autre lieu équipé de lignes blanches parallèles, au sol, où un véhicule peut stationner sans gêner la circulation. Le véhicule doit être placé entre deux lignes blanches, à une distance latérale égale des deux lignes.

Lorsque le véhicule est correctement installé, la caméra réalise au moins une prise d'image de la scène de route située à l'avant du véhicule. Compte tenu du positionnement du véhicule, l'image de cette scène de route comporte les lignes blanches au sol.

Le procédé de l'invention consiste ensuite à détecter, sur l'image, les lignes blanches et à estimer, à partir de ces lignes blanches, un point de fuite. Le point de fuite est situé sur la ligne d'horizon de l'image. Ce point de fuite correspond au point de convergence des lignes blanches sur l'image. Il est déterminé mathématiquement, par exemple, au moyen de la transformée de Hough. Lorsque le point de fuite est déterminé sur l'image, le procédé de l'invention propose de le faire coïncider avec le point de positionnement. Le tracé d'une ligne verticale peut contribuer à un réglage plus simple et compréhensible. Cette ligne est appelée la ligne de fuite. Comme on le verra plus en détails par la suite, cette ligne de fuite peut être verticale ou horizontale, mais on préfère faire coïncider le point de fuite et le point de positionnement sur cette verticale.

Le procédé de l'invention consiste ensuite à estimer le milieu de l'image. Le milieu de l'image est une ligne verticale passant par le centre de l'image et partageant l'image en deux parties sensiblement égales.

Le procédé se poursuit par une opération réalisée par l'utilisateur, par exemple le conducteur du véhicule. Cette opération consiste à déplacer angulairement l'angle de vision de la caméra, c'est-à-dire à déplacer l'orientation de la caméra, de sorte la ligne de fuite coïncide avec le milieu de l'image. Lorsque la ligne de fuite est confondue avec le milieu de l'image, alors la caméra est correctement orientée horizontalement.

Comme expliqué précédemment, le point de fuite est déterminé en recherchant le point de convergence des lignes blanches sur l'image et en traçant une ligne passant par ce point. Dans le mode de réalisation préféré de l'invention, la ligne de fuite est verticale. Autrement dit, la ligne passant par le point de fuite est une ligne verticale. Dans ce mode de réalisation, la ligne passant par le milieu de l'image est également une ligne verticale.

Ces deux lignes peuvent être affichées sur un écran de visualisation. Pour une meilleure visualisation, ces deux lignes peuvent être de deux couleurs différentes. L'utilisateur devra alors chercher à rapprocher ces deux lignes, de sorte qu'elles deviennent confondues, en modifiant l'orientation de la caméra. Lorsque ces deux lignes sont confondues, l'orientation de la caméra est optimale.

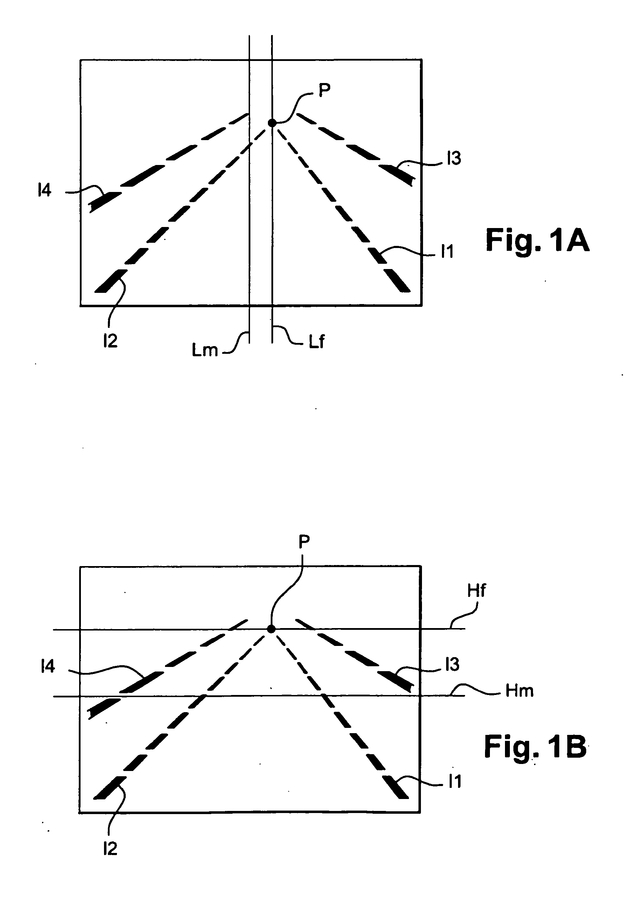

Le mode de réalisation qui vient d'être décrit est représenté sur la figure 1A. Plus précisément, cette figure 1A montre un exemple de quatre lignes blanches parallèles au sol : les deux lignes internes I1 et I2 sont des lignes discontinues et les deux lignes externes I3 et I4 sont des bandes d'arrêt d'urgence. Le point de fuite est le point P de convergence des lignes 11 et 12. La ligne de fuite Lf est la ligne verticale passant par P. La ligne Lm est la ligne de milieu, appelée aussi simplement milieu, partageant l'image verticalement en deux parties de mêmes dimensions. Tant que les lignes Lf et Lm ne sont pas confondues, l'orientation de la caméra n'est pas optimale. En déplaçant angulairement la caméra, la ligne de fuite est déplacée tandis que la ligne de milieu reste identique. Ainsi, en déplaçant angulairement la caméra, on peut agir sur la position de la ligne de fuite Lf par rapport à la ligne de milieu Lm.

Ce mode de réalisation dans lequel la ligne de fuite est verticale assure un réglage de la caméra horizontalement, c'est-à-dire latéralement dans le plan de la route.

Dans un autre mode de réalisation de l'invention, la ligne de fuite de l'image peut être horizontale. Dans ce cas, l'orientation de la caméra est réglée verticalement dans un plan perpendiculaire au plan de la route. On règle ainsi le tangage de la caméra dans le véhicule, c'est-à-dire l'inclinaison verticale de la caméra par rapport au véhicule. Dans ce cas, l'utilisateur doit chercher à faire coïncider la ligne de fuite horizontale avec une ligne horizontale de référence afin d'avoir une inclinaison verticale optimale de la caméra. Ce mode de réalisation est représenté sur la figure 1B. Plus précisément, cette figure 1B montre le même exemple de quatre lignes blanches parallèles au sol que la figure 1A. La ligne de fuite Hf est la ligne horizontale passant par le point de fuite P. La ligne Hm est la ligne de référence partageant l'image horizontalement en deux parties par exemple d'inégales hauteurs, notamment dans un rapport d'environ 1/3, 2/3. Tant que les lignes Hf et Hm ne sont pas confondues, l'orientation verticale de la caméra n'est pas optimale. En déplaçant angulairement la caméra vers le haut ou vers le bas, on peut agir sur la position verticale de la ligne de fuite f par rapport à la ligne de milieu Lm.

On comprend que le réglage de la caméra peut être réalisé à la fois horizontalement et verticalement. Lorsque l'orientation horizontale et l'inclinaison verticale sont correctement réglées, la caméra est orientée de façon optimale.

Ce mode de réalisation avec réglage horizontal et vertical est utilisé, de préférence, dans une application à la détection d'obstacles où l'évaluation de la distance est un paramètre essentiel pour apprécier la position de l'obstacle par rapport au véhicule.

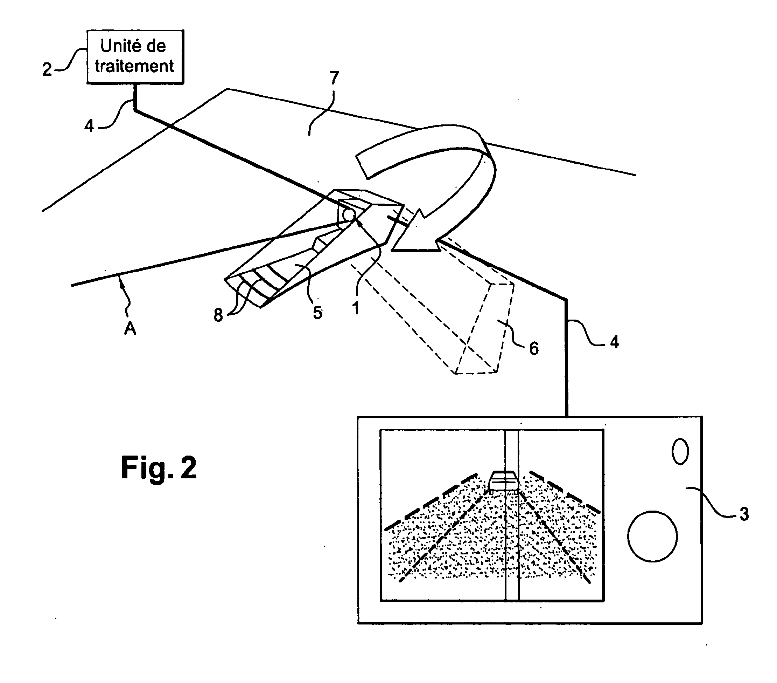

Le procédé de l'invention est mis en oeuvre par un système comportant la caméra dont on cherche à régler l'orientation, une unité de traitement des images et une interface entre l'unité de traitement et l'utilisateur. Un exemple d'un tel système est représenté sur la figure 2. Plus précisément, cette figure 2 montre un exemple d'une partie d'un véhicule, en particulier, le pare-brise derrière lequel est installée la caméra à régler. Dans la plupart des applications utilisant une caméra, celle-ci est installée entre le pare-brise 7 et le rétroviseur intérieur central 6 du véhicule. Elle est donc montée sensiblement au centre du véhicule. Lorsque la caméra est installée au centre du véhicule, son orientation latérale et, éventuellement, verticale peut être réglée en suivant les étapes du procédé de l'invention.

Dans l'exemple de la figure 2, la caméra 1 est orientée suivant l'axe A. La caméra 1 est équipée d'une flasque 5 munie d'une ou plusieurs nervures 8 permettant d'éviter la réflexion des rayons lumineux sur la caméra. La caméra 1 réalise les images de la scène de route, aussi bien celles permettant le réglage de l'orientation de la caméra que celles permettant la détection d'obstacles ou de lignes blanches.

Ce système de réglage de l'orientation de la caméra comporte également une unité de traitements d'images 2. Cette unité de traitement 2 peut être un processeur intégré à la caméra ou bien tout autre processeur embarqué à bord du véhicule et apte à traiter des images.. Lorsque l'unité de traitements 2 n'est pas intégrée à la caméra 1, elle est reliée par une liaison 4 à la caméra 1. Cette liaison peut-être une liaison filaire ou radio. L'unité de traitements 2 assure la détection des lignes blanches dans l'image de la scène de route, l'estimation du point de fuite et de la ligne verticale de fuite ainsi que l'estimation du milieu de l'image avec la ligne de milieu dans un plan vertical. Comme montré à la figure 2, le positionnement vertical du point de fuite n'est pas au milieu de l'image. Il est plutôt placé dans le premier tiers supérieur, pour disposer d'un maximum d'informations dans l'image pour tracer les lignes de fuite.

Le système de l'invention comporte aussi une interface entre l'unité de traitements et l'utilisateur. Cette interface a pour but d'indiquer à l'utilisateur comment modifier la position de la caméra 1 pour que les lignes de fuite et de milieu coïncident. Cette interface est reliée à l'unité de traitement, par exemple par une liaison filaire 4.

Cette interface peut être un écran de visualisation 3, comme montré sur la figure 2. Cet écran 3 affiche l'image de la scène de route ainsi que les lignes de point de fuite, de milieu dans un plan vertical et de positionnement. L'image affichée peut être par exemple l'une des images des figures 1A et 1B. Dans ce cas, l'utilisateur voit directement sur l'écran dans quel sens il doit déplacer la caméra pour que les deux lignes coïncident. Pour assurer un réglage aisé, l'image affichée est réactualisée à intervalle régulier de sorte que l'utilisateur puisse suivre, sur l'écran, les conséquences du déplacement réalisé. L'utilisateur peut voir de lui-même lorsque l'orientation de la caméra est correcte.

Dans ce mode de réalisation, l'écran de visualisation 3 peut être un écran compatible vidéo, tel qu'un écran de PDA, un écran du système de navigation du véhicule, d'un lecteur de DVD installé dans le véhicule ou tout autre écran tel que l'écran de visualisation associé au système de détection d'obstacles.

Pour les applications ne comportant pas d'écran, et afin d'éviter le surcoût d'un écran supplémentaire, l'interface peut être un simple dispositif d'indication du sens de déplacement, sonore ou visuel. Dans ce cas, l'interface informe l'utilisateur, au moyen de signaux sensitifs, des déplacements à effectuer sur la caméra. Ce dispositif d'indication peut être un ensemble visuel réalisé au moyen de diodes électroluminescentes. Par exemple, une diode d'une première couleur indique le déplacement à effectuer vers la droite et une seconde diode d'une seconde couleur indique le déplacement à effectuer sur la gauche ; lorsque les deux diodes sont allumées l'orientation est correcte.

Le dispositif d'indication peut aussi être réalisé au moyen de flèches lumineuses indiquant le sens dans lequel la caméra doit être déplacée ; lorsque les deux flèches sont allumées l'orientation est optimale.

Le dispositif d'indication peut également être un ensemble sonore qui fournit deux signaux sonores différents, par exemple un premier signal pour indiquer un déplacement vers la droite et un second signal pour indiquer un déplacement vers la gauche ; un troisième signal sonore indique à l'utilisateur que la caméra est correctement orientée. Un tel dispositif d'indication sonore a pour avantage d'utiliser les moyens sonores du système de suivi de lignes blanches, utilisé pour prévenir le conducteur d'un dépassement de ligne blanche.

## Revendications

1. Procédé de réglage de l'orientation d'une caméra (1) faisant partie d'un système de détection d'obstacles ou de suivi de lignes blanches et installée derrière le pare-brise (7) d'un véhicule. Le procédé comportant les opérations suivantes:
- installation du véhicule sur un emplacement muni de marquages (I1-I4) parallèles au sol, le véhicule étant stationné sur l'emplacement lors des étapes suivantes,
- détection de ces marquages (I1, 12), et obtention d'une image de ces marquages,
- estimation, à partir de ces marquages, d'un point de fuite (P),
- estimation sur l'image d'un milieu dans un plan sensiblement vertical de ladite image,
- mise en coïncidence du point de fuite (P) avec ledit millieu de l'image par déplacement angulaire de la caméra (1).

2. Procédé selon la revendication 1, **caractérisé en ce que** le point de fuite (P) est un point de convergence des marquages parallèles, sur l'image.

3. Procédé selon la revendication 2, **caractérisé en ce que** l'estimation du point de fuite (P) comprend la détermination de l'emplacement du point de convergence (P) et le tracé d'une ligne de fuite (Lf) passant par ce point de convergence.

4. Procédé selon l'une quelconque des revendications précédentes, **caractérisé en ce que** l'estimation du milieu de l'image comporte une opération de tracé d'une ligne de milieu (Lm) passant par le centre de l'image, ou utilise un gabarit

5. Procédé selon la revendication 3 et 4, **caractérisé en ce que** les lignes passant par le point de convergence (Lf) et le milieu de l'image (Lm) sont substantiellement verticales.

6. Procédé selon la revendication 3 et 4. **caractérisé en ce que** les lignes (Hf) passant par le point de convergence (P) et le point de positionnement sont substantiellement horizontales.

7. Procédé selon l'une quelconque des revendications précédentes, **caractérisé en ce que** le déplacement de la caméra (1) est réalisé en fonction d'indications de déplacement déduites de la position du point de fuite (P) par rapport au milieu dans un plan vertical de l'image et de la position verticale du point de positionnement.

8. Système de réglage de l'orientation d'une caméra (1) mettant en oeuvre un procédé de réglage de l'orientation d'une caméra faisant partie d'un système de détection d'obstacles ou de suivi de lignes blanches et installée derrière le pare-brise (7) d'un véhicule, et comportant les opérations suivantes
- installation du véhicule sur un emplacement muni de marquages (I1-I4) parallèles au sol, le véhicule étant stationné sur l'emplacement lors des étapes suivantes,
- détection de ces marquages (I1, I2), et obtention d'une image de ces marquages,
- estimation, à partir de ces marquages, d'un point de fuite (P),
- estimation sur l'image d'un milieu dans un plan sensiblement vertical de ladite image,
- mise en coïncidence du point de fuite (P) avec ledit milieu de l'image par déplacement angulaire de la caméra,
ledit dispositif comportant :
- une caméra (1) réalisant au moins une image des marquages parallèles au sol,
- une unité de traitements (2) détectant lesdits marquages sur l'image, à estimer un point de fuite (P) et à estimer le point de positionnement,
- une interface utilisateur (3) fournissant des indications de déplacement de la caméra (1) à l'utilisateur.

9. Système selon la revendication 8, **caractérisé en ce que** l'interface comporte un écran (3) affichant l'image réalisée par la caméra (1) ainsi que les lignes de fuite et de milieu de l'image.

10. Système selon la revendication 8, **caractérisé en ce que** l'interface (3) comporte un dispositif d'indication visuel.

11. Système selon la revendication 10, **caractérisé en ce que** le dispositif d'indication visuel comporte une ou des diodes lumineuses indiquant un sens de déplacement.

12. Système selon la revendication 8, **caractérisé en ce que** l'interface (3) comporte un dispositif d'indication sonore.

13. Véhicule automobile, **caractérisé en ce qu'**il comporte un système selon l'une quelconque des revendications 8 à 12.

## Claims

1. Method for adjustment of the orientation of a camera (1) which forms part of a system for detection of obstacles or monitoring of white lines, and is installed behind the windscreen (7) of a vehicle, the method comprising the following operations:
- installation of the vehicle on a location which is provided with markings (I1 - 14) which are parallel to the ground, the vehicle being parked on the location during the following steps:
- detection of these markings (I1, I2), and obtaining of an image of these markings:
- estimation, on the basis of these markings, of a vanishing point (P);
- estimation on the image of a middle point on a substantially vertical plane of the said image; and
- making the vanishing point (P) coincide with the said middle point of the image by angular displacement of the camera (1).

2. Method according to claim 1, **characterised in that** the vanishing point (P) is a point of convergence of the parallel markings on the image.

3. Method according to claim 2, **characterised in that** the estimation of the vanishing point (P) comprises the determination of the location of the point of convergence (P), and plotting of a vanishing trace (Lf) which passes via this point of convergence.

4. Method according to anyone of the preceding claims, **characterised in that** the estimation of the middle point comprises an operation of plotting a middle point line (Lm) which passes via the centre of the image, or uses a template.

5. Method according to claim 3 and 4, **characterised in that** the lines which pass via the point of convergence (Lf) and the middle point of the image (Lm) are substantially vertical.

6. Method according to claim 3 and 4, **characterised in that** the lines (Hf) which pass via the point of convergence (P) and the point of positioning are substantially horizontal.

7. Method according to anyone of the preceding claims, **characterised in that** the displacement of the camera (1) is carried out according to displacement indications which are deduced from the position of the vanishing point (P) relative to the middle point on a vertical plane of the image, and from the vertical position of the positioning point.

8. System for adjustment of the orientation of a camera (1) which implements a method for adjustment of the orientation of a camera which forms part of a system for detection of obstacles or monitoring of white lines, and is installed behind the windscreen (7) of a vehicle, the method comprising the following operations:
- installation of the vehicle on a location which is provided with markings (I1-14) which are parallel to the ground, the vehicle being parked on the location during the following steps:
- detection of these markings (I1, I2), and obtaining of an image of these markings:
- estimation, on the basis of these markings, of a vanishing point (P);
- estimation on the image of a middle point on a substantially vertical plane of the said image; and
- making the vanishing point (P) coincide with the said middle point of the image by angular displacement of the camera,
the said device comprising:
- a camera (1) which provides at least one image of the markings parallel to the ground;
- a processing unit (2) which detects the said markings on the image, in order to estimate a vanishing point (P) and estimate the positioning point; and
- a user interface (3) which gives indications of displacement of the camera (1) to the user.

9. System according to claim 8, **characterised in that** the interface comprises a screen (3) which displays the image provided by the camera (1), as well as vanishing traces and middle point lines of the image.

10. System according to claim 8, **characterised in that** the interface (3) comprises a visual indication device.

11. System according to claim 10, **characterised in that** the visual indication device comprises one or more light diodes which indicate a direction of displacement.

12. System according to claim 8, **characterised in that** the interface (3) comprises a sound indication device.

13. Motor vehicle, **characterised in that** it comprises a system according to any one of claims 8 to 12.

## Patentansprüche

1. Verfahren zum Einstellen der Ausrichtung einer Kamera (1), die zu einer Vorrichtung zum Erkennen von Hindernissen oder Verfolgen weißer Linien gehört und hinter der Windschutzscheibe (7) eines Fahrzeugs angebracht ist, wobei das Verfahren die folgenden Schritte umfasst:
- Anordnen des Fahrzeugs an einem mit parallelen Fahrbahnmarkierungen (I1-I4) versehenen Ort, wobei das Fahrzeug bei den nachfolgenden Schritten an diesem Ort verbleibt,
- Erkennen der Markierungen (I1, I2) und Aufnehmen eines Bildes dieser Markierungen,
- Schätzen eines Fluchtpunktes (P) anhand der Markierungen,
- Schätzen einer Mitte im Bild in einer im Wesentlichen senkrechten Ebene des Bildes,
- in Übereinstimmung bringen des Fluchtpunktes (P) mit der Bildmitte durch Winkelverschiebung der Kamera (1).

2. Verfahren nach Anspruch 1,
**dadurch gekennzeichnet, dass** der Fluchtpunkt (P) ein Konvergenzpunkt der parallelen Markierungen auf dem Bild ist.

3. Verfahren nach Anspruch 2,
**dadurch gekennzeichnet, dass** das Schätzen des Fluchtpunktes (P) das Bestimmen der Stelle des Konvergenzpunktes (P) und das Ziehen einer durch diesen Konvergenzpunkt verlaufenden Fluchtlinie (Lf) umfasst.

4. Verfahren nach einem der vorhergehenden Ansprüche,
**dadurch gekennzeichnet, dass** das Schätzen der Bildmitte das Ziehen einer durch den Bildmittelpunkt verlaufenden Mittellinie (Lm) umfasst oder von einer Schablone Gebrauch macht.

5. Verfahren nach Anspruch 3 und 4,
**dadurch gekennzeichnet, dass** die durch den Konvergenzpunkt (Lf) und die Bildmitte (Lm) verlaufenden Linien im Wesentlichen senkrecht sind.

6. Verfahren nach Anspruch 3 und 4,
**dadurch gekennzeichnet, dass** die durch den Konvergenzpunkt (P) und den Positionspunkt verlaufenden Linien (Hf) im Wesentlichen waagerecht sind.

7. Verfahren nach einem der vorhergehenden Ansprüche,
**dadurch gekennzeichnet, dass** das Verschieben der Kamera (1) in Abhängigkeit von Verschiebeangaben erfolgt, die von der Lage des Fluchtpunktes (P) bezüglich der Mitte in einer vertikalen Bildebene und von der senkrechten Lage des Positionspunktes abgeleitet sind.

8. Vorrichtung zum Einstellen der Ausrichtung einer Kamera (1), die ein Verfahren zum Einstellen der Ausrichtung einer Kamera verwendet, die zu einer Vorrichtung zum Erkennen von Hindernissen oder Verfolgen weißer Linien gehört und hinter der Windschutzscheibe (7) eines Fahrzeugs angebracht ist, wobei das Verfahren die folgenden Schritte umfasst:
- Anordnen des Fahrzeugs an einem mit parallelen Fahrbahnmarkierungen (I1-I4) versehenen Ort, wobei das Fahrzeug bei den nachfolgenden Schritten an diesem Ort verbleibt,
- Erkennen der Markierungen (I1, 12) und Aufnehmen eines Bildes dieser Markierungen,
- Schätzen eines Fluchtpunktes (P) anhand der Markierungen,
- Schätzen einer Mitte im Bild in einer im Wesentlichen senkrechten Ebene des Bildes,
- in Übereinstimmung bringen des Fluchtpunktes (P) mit der Bildmitte durch Winkelverschiebung der Kamera (1),
wobei die Vorrichtung umfasst:
- eine Kamera (1), die wenigstens ein Bild der parallelen Fahrbahnmarkierungen erzeugt,
- eine Verarbeitungseinheit (2), die die Markierungen auf dem Bild erkennt sowie einen Fluchtpunkt (P) und den Positionspunkt schätzt,
- eine Benutzerschnittstelle (3), die dem Benutzer Angaben zum Verschieben der Kamera (1) liefert.

9. Vorrichtung nach Anspruch 8,
**dadurch gekennzeichnet, dass** die Schnittstelle einen Bildschirm (3) umfasst, der das von der Kamera (1) erzeugte Bild sowie die Flucht- und Mittellinien des Bildes anzeigt.

10. Vorrichtung nach Anspruch 8,
**dadurch gekennzeichnet, dass** die Schnittstelle (3) eine Vorrichtung zur visuellen Anzeige umfasst.

11. Vorrichtung nach Anspruch 10,
**dadurch gekennzeichnet, dass** die Vorrichtung zur visuellen Anzeige eine Leuchtdiode oder Leuchtdioden umfasst, die eine Verschieberichtung angeben.

12. Vorrichtung nach Anspruch 8,
**dadurch gekennzeichnet, dass** die Schnittstelle (3) eine Vorrichtung zur akustischen Anzeige umfasst.

13. Kraftfahrzeug,
**dadurch gekennzeichnet, dass** es eine Vorrichtung nach einem der Ansprüche 8 bis 12 umfasst.
